# EUROPÄISCHE PATENTANMELDUNG

(11) **EP 4 837 934 A1**
(43) Veröffentlichungstag der Anmeldung: **11.11.2026**
(21) Anmeldenummer: 25174649.1
(22) Anmeldetag: 06.05.2025
(51) Int. Cl.: C08L 91/06

(54) **REISKLEIEWACHSETHOXYLATE MIT HOHER EMULGIERBARKEIT**

(71) Anmelder: CLARIANT INTERNATIONAL LTD, 4132 Muttenz (CH)
(72) Erfinder: Kratzer, Philipp, 86637 Binswangen (DE); True, Daniela, 86836 Untermeitingen (DE)
(74) Vertreter: Zusammenschluss Clariant

(57) **Zusammenfassung**

Die Erfindung betrifft ein ethoxyliertes Reiswachsoxidat (RE), welches eine EO-Zahl im Bereich von 1 bis kleiner 1000 bevorzugt von 5 bis kleiner 500, besonders bevorzugt von 15 bis kleiner 250 aufweist, ein Verfahren zu dessen Herstellung sowie dessen Verwendung in Emulsionen, Beschichtungszusammensetzungen, Farbstoffzusammensetzungen und Pflege- und Reinigungsmitteln.

## Beschreibung

Die Erfindung betrifft ein helles ethoxyliertes Reiswachsoxidat, ein Verfahren zur Herstellung dieses ethoxylierten Reiswachsoxidats und dessen Verwendung in Emulsionen, als Additiv in Reinigungs- und Pflegemitteln, in Farbzusammensetzungen und/oder in Lacken und Beschichtungen.

Ethoxylate mit einem hohen Ethoxylatgehalt werden als Additive in Reinigern und Pflegemittel für Haushalt und Industrie, als Pflanzenschutzadditiv, als Trennmittel, in der Metallverarbeitung, in der Kosmetikindustrie und in Farbstoffzusammensetzungen für Schreibwarenartikel (bspw. Stifte) eingesetzt.

Helle Ethoxylate eignen sich als Glanzadditive besonders für Produkte und insbesondere Beschichtungen, die keine oder eine möglichst geringe Färbung aufweisen, wie sie beispielsweise für Textil & Leder Anwendungen, im Kosmetikbereich oder im Agrar- und Lebensmittelbereich verwendet werden. Als Beispiele für den Agrarbereich sind Blatt-, Saatgut-, und Düngemittelbeschichtungen zu nennen. Glanzadditiven verleihen dem beschichteten Produkt eine temporäre Schutzwirkung und werten es durch einen erhöhten Glanz optisch auf.

Ein häufig verwendetes Ethoxylat für die oben beschriebenen Anwendungen ist das Montanwachsethoxylat Licowax KST, welches eine hohe EO-Zahl aufweist. Es wird hauptsächlich als wasser- oder lösungsmittelbasierte Dispersion für derartige Anwendungen eingesetzt.

Ebenso kann Licowax KST für nichtionische Selbstglanzemulsionen, für Polituranwendungen und als Verzögerungs- und Fixiermittel für Pflanzenschutzmittel verwendet werden. Auf Grund seiner Montanwachsbasis stammt es jedoch aus keiner erneuerbaren Rohstoffquelle.

Es besteht somit ein großer Bedarf an nachhaltig hergestellten Ethoxylaten auf Basis erneuerbarer Rohstoffe, die in Wasser oder polaren Lösungsmitteln gut löslich sind und die als Glanzadditive mit geringer Eigenfarbe geeignet sind, um sie beispielsweise in Polituren, (Boden, Auto etc.), Reinigungs- und Pflegemittel oder für Beschichtungen und Farbstoffzusammensetzungen einzusetzen.

Überraschenderweise wurde nun gefunden, dass sich helle, ethoxylierte Reiswachsoxidate mit variablen EO-Zahlen (im Folgenden als ethoxylierte Reiswachsoxidate (RE) bezeichnet) effizient herstellen lassen und sich hervorragen zur Herstellung von Emulsionen oder als Wachsbestandteil einer wässrigen (Beschichtungs-)zusammensetzung eignen. Die EO-Zahl beschreibt die Anzahl der Ethylenoxid-Einheiten, die auf die Säurefunktionen einer Wachssäure aufgepfropft werden. Sie wird ermittelt, indem eine Elementaranalyse zur Bestimmung des Kohlenstoff-, Wasserstoff- und Sauerstoffgehalt, gemäß DIN 51732:2014 und ASTM D5622:2017, durchgeführt wird und die dort generierten Daten mit berechneten Elementaranalysendaten für verschiedene EO-Zahlen verglichen wurden.

Der Begriff Reiswachs wird synonym zum Begriff Reiskleiewachs verwendet. Ebenso werden die Begriffe Reiswachsoxidat und Reiskleiewachsoxidat, sowie die Begriffe ethoxyliertes Reiswachsoxidat und ethoxyliertes Reiskleiewachsoxidat synonym verwendet.

Die erfindungsgemäßen ethoxylierten Reiswachsoxidate sind auf Grund ihrer hydrophilen Eigenschaften sehr leicht in heißem Wasser löslich, wodurch sie wässrigen Emulsionen oder Dispersionen basierend auf polaren Lösungsmitteln und wasserbasierten Beschichtungszusammensetzungen wie beispielsweise Reinigungs- und Pflegemittel, Polituren und Agrarbeschichtungen leicht zugänglich gemacht werden können.

Gegenstand der Erfindung ist daher ein ethoxyliertes Reiswachsoxidat (RE), welches eine EO-Zahl im Bereich von 1 bis kleiner 1000 bevorzugt von 10 bis kleiner 500, besonders bevorzugt von 15 bis kleiner 250 aufweist. Ganz besonders bevorzugt ist ein ethoxyliertes Reiswachsoxidat (RE), welches eine EO-Zahl im Bereich von 50 bis kleiner 500, noch mehr bevorzugt im Bereich von 100 bis kleiner 250 aufweist.

Ein solches ethoxyliertes Reiswachsoxidat ist durch Ethoxylierung eines Reiswachsoxidats herstellbar. Unter Ethoxylierung wird die Umsetzung mit Ethylenoxid verstanden.

Bevorzugt ist das ethoxylierte Reiswachsoxidat (RE) dadurch gekennzeichnet, dass es eine Säurezahl, gemessen nach DIN ISO 2114, von kleiner als 10 mg KOH/g aufweist. Je kleiner die Säurezahl ist, desto mehr Carboxylfunktionalitäten wurden ethoxyliert, wodurch sich die Löslichkeit in einem polaren Lösungsmittel, insbesondere in Wasser, erhöht.

Weiterhin weist das ethoxylierte Reiswachsoxidat (RE) vorzugsweise eine lodfarbzahl (IFZ), gemessen nach DIN 6162 (2014), von kleiner als 10, bevorzugt kleiner als 8, besonders bevorzugt von kleiner als 6 auf, denn ein ethoxyliertes Reiswachsoxidat (RE) mit einer solch niedrigen lodfarbzahl ist besonders für helle, weiße oder transparente Beschichtungen geeignet, da es die Färbung kaum verändert.

Vorzugsweise ist die Verseifungszahl, gemessen nach DIN ISO 3681, des ethoxyliertes Reiswachsoxidat (RE) kleiner als 50 mg KOH/g, da dies die Polarität und Löslichkeit in polaren Lösemitteln erhöht.

Bevorzugt ist das ethoxylierte Reiswachsoxidat (RE) dadurch gekennzeichnet, dass es einen Tropfpunkt zwischen 45 und 75 °C, bevorzugt zwischen 50 und 70 °C, besonders bevorzugt zwischen 55 und 60°C, gemessen nach ISO 2176, aufweist.

Weiterer Gegenstand der Erfindung ist ein Verfahren zur Herstellung eines ethoxylierten Reiswachsoxidats (RE), umfassend die Schritte:
a) Bereitstellen eines Reiswachsoxidats (O)
b) Ethoxylierung des Reiswachsoxidats (O) unter basischen Bedingungen;
c) optionales Entfernen von Rückständen enthaltend Dioxan aus der organischen Phase, um das ethoxylierte Reiswachsoxidat (RE) in gereinigter Form zu erhalten.

Entsprechende allgemeine Herstellvorschriften zur Ethoxylierung von Fettalkoholen oder Fettsäuren finden sich beispielhaft in DE4128827A1.

Das Reiswachsoxidats (O) kann ein kommerziell erhältliches Reiswachsoxidat sein, wie beispielsweise ein Reiswachsoxidat der Clariant AG, dass in den Oxidationsstufen Licocare RBW 101, Licocare RBW 102 oder Licocare RBW 106 erhältlich ist. Es kann aber auch über einen Oxidationsprozess aus einem rohen Reiskleiewachs oder einem raffinierten Reiskleiewachs hergestellt werden.

Vorzugsweise werden die basischen Bedingen der Ethoxylierung in Schritt b) des Verfahrens durch Zugabe einer 30 - 70 % -igen Lauge eines Alkalimetallhydroxids, bevorzugt einer Natrium- oder Kalilauge erzielt.

Bevorzugt wird Schritt b) des Verfahrens bei einer Temperatur zwischen 140°C und 200°C durchgeführt.

Vorzugsweise wurde das Reiswachsoxidat (O) aus Schritt a) des erfindungsgemäßen Verfahrens nach dem folgenden Verfahren umfassend die Schritte i) -vii) hergestellt:
i) Bereitstellen eines Reiswachses (RW),
ii) Bereitstellen einer Mischung (M) aus Chromtrioxid und Schwefelsäure;
iii) Durchführen der Oxidation des Reiswachses (RW) durch Umsetzung des Reiswachses (RW) mit der Mischung (M), um ein Reiswachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Reiswachsoxidat (O) in gereinigter Form zu erhalten;
vii) optionales Wiederholen der Folge von Schritten ii) bis vi), wobei anstelle des Reiswachses (RW) das Reiswachsoxidat (O), gegebenenfalls in gereinigter Form, eingesetzt wird.

Weiterer Gegenstand der Erfindung ist die Verwendung des erfindungsgemäßen ethoxylierten Reiswachsoxidats (RE) zu land- oder forstwirtschaftlichen Zwecken, in Reinigungs- und/oder Pflegemitteln, in Schreibwarenartikeln, in Druckfarben und/oder in Lacken.

Ethoxylierte Reiskleiewachsoxidate (RE) sind wirksame Glanzadditive für Pflegemittel und Reinigungsmittel und werden deshalb als Additive für die Reinigung und Pflege von Böden, Autos, Schuhen usw. eingesetzt. Sie sind aber auch in Beschichtungszusammensetzungen wie beispielsweise Agrarbeschichtungen als Hilfsmittel und Trägermaterial für Wirkstoffe verwendbar.

Reinigungs- und Pflegemittel und auch Farbstoffzusammensetzungen und Beschichtungszusammensetzungen werden häufig in Form einer Emulsion oder Dispersion bereitgestellt, weshalb eine Emulsion oder Dispersion mit einem polaren Lösemittel, wie beispielsweise Wasser oder Isopropanol, umfassend ein erfindungsgemäßes ethoxyliertes Reiswachsoxidat (RE) ebenfalls Gegenstand der Erfindung ist.

Beschichtungszusammensetzungen oder Farbstoffzusammensetzungen lassen sich als Emulsion oder als Paste auf Oberflächen aufbringen, weshalb auch eine Beschichtungszusammensetzung umfassend ein ethoxyliertes Reiswachsoxidat (RE) oder eine Farbstoffzusammensetzung umfassend ein ethoxyliertes Reiswachsoxidat (RE) Gegenstand der vorliegenden Patentanmeldung ist.

Diese Produkte werden unter anderem für folgende Branchen/Anwendungen eingesetzt: Textil & Leder, Reiniger und Pflegemittel für Haushalt und Industrie, Pflanzenschutz, Industriereiniger, industrielle Anwendungen/ Metallverarbeitung, Kosmetik, Schreibwarenartikel (bspw. Stifte)

### Experimentelle Daten

Die in Tabelle 1 aufgeführten Standardmethoden dienen zur Bestimmung der Kennzahlen von natürlichen und synthetischen Wachsen und Wachsderivaten und der Bestimmung der Eigenschaften von Emulsionen. Sie werden zur Charakterisierung der erfindungsgemäßen ethoxylierten Reiswachsoxidate (RE), ihrer Ausgangsprodukte und der Vergleichssubstanzen, wie beispielsweise Montanwachs-, Kokosfett- und Carnaubawachsethoxylaten verwendet.

**Tabelle 1: Methodenübersicht**

| | Methode |
|---|---|
| Säurezahl (SZ) [mg KOH/g] | ISO 2114 (2002) |
| Verseifungszahl (VZ) [mg KOH/g] | ISO 3681 (2019) |
| Tropfpunkt (TP) [°C] | ISO 2176 (1997) |
| DSC [°C] | DIN EN ISO 11357-1 |
| DSC [J/g] | DIN EN ISO 11357-1 |
| Olgehalt (OG) [Gew.-%] | AOCS Ja 4-46 (2017) |
| lodfarbzahl (IFZ) | DIN 6162 (2014) |
| Yellowness Index (YI) | ASTM D 1925 |
| Glanzwert | gemessen bei 60° Winkel mit micro-TRI-gloss meter von BYK |
| Viskosität [mPas] | DIN 53019 (gemessen @25°C, Scherrate 10-110) |
| Kohlenstoffgehalt [%] | Elementaranalyse gemäß DIN 51732:2014 |
| Wasserstoff [%] | Elementaranalyse gemäß DIN 51732:2014 |
| Sauerstoffgehalt [%] | Elementaranalyse gemäß ASTM D5622:2017 |

Als Rohstoffe für das Reiswachsoxidat kann ein rohes Reiswachs eingesetzt werden. Es ist auch möglich ein raffiniertes Reiswachs einzusetzen. Die Eigenschaften des Reiswachses im Rohzustand sind in Tabelle 2 dargestellt.

**Tabelle 2: Zur Oxidation eingesetztes Reiswachs (RW) (Methoden, Abkürzungen und Einheiten in Tabelle 1)**

| Rohstoff | SZ | VZ | TP | SP | SE | Olgehalt | TGA |
|---|---|---|---|---|---|---|---|
| | [mg KOH/g] | [mg KOH/g] | [°C] | [°C] | [J/g] | [%] | [wt.%] / [wt.%] |
| Reiswachs (roh) | 1.3 | 83 | 77 | 79 | -192 | 1.9 | 1.2 / 6.4 |

### Beispiele 1-3: Darstellung eines Reiswachsoxidats aus rohem Reiswachs

In einem 3 I Reaktionsgefäß mit Rührer, Temperaturfühler, Tropftrichter und Rückflusskühler wurde Chromschwefelsäure vorgelegt und auf 100°C erwärmt. Anschließend wurde geschmolzenes Reiskleiewachs portionsweise zugegeben. Die Temperatur des Reaktionsgemisches wurde auf 110°C eingestellt und die angegebene Zeit mit ca. 200 U/min mit einer Dissolverscheibe gerührt. Das Heizen sowie Rühren wurde eingestellt. Sobald sich die Phasen getrennt haben, wurde die wässrige Phase abgetrennt.

Für die Beispiele 2 sowie 3 wurde der Vorgang der Oxidation 2- bzw. 3-mal wiederholt.

Die organische Phase wurde mit einer wässrigen Lösung von Oxalsäure und Schwefelsäure und anschließend mit Wasser chromfrei gewaschen, in warme Zentrifugengläser abgelassen und zentrifugiert.

**Tabelle 3: Herstellung verschiedener Reiswachsoxidate (O)**

| Beispiel | | 1 | 2 | 3 |
|---|---|---|---|---|
| Reiskleiewachsoxidat (O). | | O1 | O2 | O3 |
| eingesetzte Reiswachsmenge | [g] | 150 | 150 | 150 |

| Zusätze | | | | |
|---|---|---|---|---|
| Chromschwefelsäure (100g CrO3/l) | [mL] | 2250 | 1500 | 1500 |
| | | | 1000 | 1000 |
| | | | | 400 |

| | Bedingungen | | | |
|---|---|---|---|---|
| Reaktionsdauer | [h] | 4 | 8/8 | 8/8/8 |
| Temperatur | [°C] | 110 | 110 | 110 |

| | Prüfergebnisse | | | |
|---|---|---|---|---|
| SZ | [mg KOH/g] | 52,2 | 101,1 | 123,9 |
| VZ | [mg KOH/g] | 113 | 151,4 | 177,3 |

### Beispiel 4-7 (Erf.): Ethoxylierung von oxidiertem Reiskleiewachs

In einem 5 l Reaktionsgefäß mit Rührer, Temperaturfühler und Eingasrohr wurde das Reiswachsoxidat vorgelegt und auf 130 °C erwärmt. Anschließend wurde 40% ige Kalilauge zugegeben. Wasser wurde im Anschluss unter Vakuum bei 130 °C abdestilliert, die Reaktionstemperatur auf 165 °C erhöht und danach Ethylenoxid eingeleitet. Nach der Reaktionszeit wurde erneut Vakuum angelegt und dieses nach 30 min mit Stickstoff gebrochen. Beim Abkühlen erstarrt das ethoxylierte Reiswachsoxidat (RE) und lässt sich ohne weitere Aufreinigung weiterverwenden.

Die EO-Zahl wurde ermittelt, indem eine Elementaranalyse zur Bestimmung des Kohlenstoff-, Wasserstoff- und Sauerstoffgehalt, gemäß DIN 51732:2014 und ASTM D5622:2017, durchgeführt wurde und die dort generierten Daten mit berechneten Elementaranalysendaten für verschiedene EO-Zahlen verglichen und entsprechend zugeordnet wurden.

**Tabelle 4: Herstellung verschiedener ethoxylierter Reiswachsoxidate (RE)**

| | | | | | |
|---|---|---|---|---|---|
| Beispiel (erf.) | | 4 | 5 | 6 | 7 |
| Eingesetztes Reiswachsoxidat | | O1 | O2 | O3 | O3 |
| Eingesetzte Menge (O) | [g] | 100 | 100 | 100 | 100 |

| Zusätze | | | | | |
|---|---|---|---|---|---|
| Kalilauge [40%ig] | [mL] | 0,15 | 0,15 | 0,15 | 0,15 |
| Ethylenoxid | [g] | 6000 | 15000 | 180 | 16000 |

| Bedingungen | | | | | |
|---|---|---|---|---|---|
| Reaktionsdauer | [h] | 6 | 7 | 8 | 8 |
| Temperatur | [°C] | 165 | 165 | 165 | 165 |

| Prüfergebnisse | | | | | |
|---|---|---|---|---|---|
| Ethoxylatname | | RE1 | RE2 | RE3 | RE4 |
| EO-Zahl | | 150 | 155 | 17 | 200 |
| Säurezahl | [mg KOH/g] | 0 | 0 | 0 | 0 |
| Verseifungszahl | [mg KOH/g] | 15 | 8 | 38 | 4 |
| OH-Zahl | [mg KOH/g] | 16 | 15 | 45 | 14 |
| Tropfpunkt | [°C] | 58 | 56 | 66 | 55 |
| IFZ | | 5 | 3 | 9 | 2 |

Den Beispielen 4 bis 7 lässt sich entnehmen, dass erfindungsgemäße ethoxylierte Reiswachsoxidate (RE) hergestellt werden konnten, die mit einer IFZ kleiner 10 sehr hell sind und eine hohe EO-Zahl größer 15 aufweisen, wodurch sie als Additiv für wässrigen Emulsionen geeignet sind.

### Beispiele 8 - 11: Herstellung wässriger Wachsemulsionen mit einem erfindungsgemäßen ethoxylierten Reiswachsoxidate (RE) und mit Vergleichsethoxylaten:

Die in Tabelle 5 beschriebenen Ethoxylate wurden zur Herstellung wässriger Emulsionen eingesetzt. Die Zusammensetzung der jeweiligen Emulsionen wird in Tabelle 6 gezeigt.

**Tabelle 5: Charakterisierung der eingesetzten Ethoxylate**

| Ethoxylat | Chemische Beschreibung | EO-Zahl | SZ | VZ | OH-Zahl | TP | IFZ |
|---|---|---|---|---|---|---|---|
| | | [ ] | [mg KOH/g] | [mg KOH/g] | [mg KOH/g] | [°C] | [ ] |
| RE4 | Ethoxyliertes Reiswachsoxidat mit 200 EO | 200 | 0 | 4 | 14 | 55 | 2 |
| Licowax KST | Ethoxyliertes Montanwachsoxi dat mit 250 EO | 250 | 1,5 | 3 | 15 | 56 | 10 |
| Genagen C 100 SG VITA | Kokosnussfettsäure/PEG Ester mit 10 EO | 10 | 1,1 | 88 | 86 | n.a.* | - |
| PEG-12 Carnauba | Polares, mit PEG verestertes Carnaubawachs | 12 | 4,1 | 72 | 52 | 87 | > 120 |

| | | | | | | | |
|---|---|---|---|---|---|---|---|
| * kein TP messbar, da flüssig | | | | | | | |

Die Produkte Licowax KST und Genagen C 100 SG VITA sind Produkte der Clariant International Ltd, bei PEG-12 Carnauba handelt es sich um ein Produkt der KosterKeunen Holland BV.

Das ethoxylierte Reiswachs RE4 aus Beispiel 7 und die als Vergleichssubstanzen eingesetzten Ethoxylate wurden unter Rühren in destilliertes Wasser, das auf eine Temperatur über dem Tropfpunkt des Ethoxylates erwärmt wurde, eingerührt. Dadurch löste sich das feste Ethoxylat in Wasser und konnte emulgiert werden. Das Aussehen der Emulsion wird in Tabelle 6 beschrieben.

Dann wurden die Emulsionen auf einen Leneta Chart mit einer schwarzen gleichmäßigen Oberfläche aufgebracht und getrocknet.

Der sich dadurch bildende Film wird ebenfalls in Tabelle 6 beschrieben und sein Glanzwert bestimmt. Glänzende Filme sind wünschenswert. Der Lenata Charts weist bei einem 60° Winkel einen Glanzwert von 75 auf. Damit besitzen Filme, bei denen die Messung mit einem micro-TRI-gloss meter von BYK einen Glanzwert bei 60° > 75 aufweisen einen eigenen Glanz, wohingegen Filme mit einem Glanzwert bei 60° < 75 trübende Eigenschaften besitzen.

**Tabelle 6: Zusammensetzung der Ethoxylat-Emulsionen**

| Beispiel | 1 | 2 | 3 | 4 |
|---|---|---|---|---|
| Licowax KST | 10,00 | | | |
| RE4 | | 10,00 | | |
| Genagen C 100 SG VITA | | | 10,00 | |
| PEG-12 Carnauba | | | | 10,00 |
| deionized Wasser | 90,00 | 90,00 | 90,00 | 90,00 |
| Temperatur | 85°C | 80°C | 30°C | 90°C |
| Aussehen der Emulsion oder Lösung | klare, gelbe Emulsion | klare, leicht gelbliche Emulsion | klare, farblose Lösung | milchige, grobteilige Dispersion |
| Aussehen und Trocknung des Filmes | Transparenter , glänzender Film, nach 5 min. getrocknet | Transparenter , glänzender Film, nach 5 min. getrocknet | Transparenter , glänzender Film, trocknet nicht | Trüber, grobteiliger Film, nach 5 min. getrocknet |
| Glanzwert, gemessen bei 60° Winkel mit micro-TRI-gloss meter von BYK | 83 | 82 | nicht messbar | 7 |
| YI | 15,1 | 6,5 | 2,1 | nicht messbar |

Aus Tabelle 6 wird ersichtlich, dass mit dem erfindungsgemäßen ethoxylierten Reiswachsoxidat aus nachhaltiger Rohstoffquelle Emulsionen für schnelltrocknende Filme herstellbar sind, die einen mit Licowax KST vergleichbaren Glanzwert aufweisen (Bsp. 2 vs Bsp. 1). Zudem weist die RE4-Emulsion und der daraus gebildete Film eine geringere Gelbfärbung (s. Bsp. 2, YI = 6,5) als die Emulsion mit Licowax KST (s. Bsp. 1, YI = 15,1) auf. Mit dem Tensid Genagen C 100 SG VITA konnte kein trockener Film hergestellt werden und der Film der mit dem PEG-12 Carnauba hergestellt wurde, war trüb und grobteilig und damit als Glanzadditiv ungeeignet.

Mit den bereits beschriebenen Ethoxylaten wurden weitere Emulsionen mit höheren Feststoffmengen hergestellt, und deren Eigenschaften bestimmt. Mit Genagen C 100 SG VITA wurde keine hochkonzentrierte Emulsion hergestellt, da aus Beispiel 3 in Tabelle 6 ersichtlich ist, dass dieses Tensid zur Bildung eines trockenen Films ungeeignet ist.

**Tabelle 7: Zusammensetzung der hochkonzentrierten Ethoxylat-Emulsionen**

| Beispiel | 5 | 6 | 7 |
|---|---|---|---|
| Licowax KST | 60,00 | | |
| RE4 | | 60,00 | |
| PEG-12 Carnauba | | | 60,00 |
| deionized Wasser | 40,00 | 40,00 | 40,00 |
| Konzentration | 60% | 60% | nicht löslich, grobteilige, instabile Dispersion |
| Viskosität, bei 25°C (Scherrate 10-110) | 9854 mPas | 7235 mPas | nicht messbar |
| YI | 55,1 | 28,9 | nicht messbar |

Tabelle 7 lässt sich entnehmen, dass das ethoxylierte Reiswachsoxidat auch in höheren Konzentrationen noch eine fließfähige Emulsion ergibt. Insbesondere bei diesen höheren Konzentrationen bewirkt die hellere Färbung des ethoxylierte Reiswachsoxidat (Bsp. 6) einen deutlich niedrigen Yellowness Index als beim Licowax KST (Bsp. 5). Mit der Zusammensetzung aus Beispiel 7 mit PEG-12 Carnauba konnte keine stabile Dispersion gebildet werden. Dementsprechend war eine Messung der Viskosität nicht möglich und auch der YI konnte nicht bestimmt werden.

Damit ist das erfindungsgemäße, ethoxylierte Reiswachsoxidat (RE) besonders zur Herstellung leicht zu verarbeitender Emulsionen geeignet, da die entsprechende Emulsion mit dem ethoxylierten Reiswachsoxidat aus RE4 eine deutlich niedrigere Viskosität aufweist als jene, die mit Licowax KST hergestellt wurde. Somit kann es auch in höheren Konzentrationen verwendet werden. Zudem ist der Gelbstich der Emulsionen viel geringer.

## Patentansprüche

1. Ethoxyliertes Reiswachsoxidat (RE), **dadurch gekennzeichnet, dass** es eine EO-Zahl im Bereich von 1 bis kleiner 1000, bevorzugt von 10 bis kleiner 500, besonders bevorzugt von 50 bis kleiner 250 aufweist.

2. Ethoxyliertes Reiswachsoxidat (RE) gemäß Anspruch 1, **dadurch gekennzeichnet, dass** dieses eine Säurezahl, gemessen nach DIN ISO 2114 von kleiner als 10 mg KOH/g aufweist.

3. Ethoxyliertes Reiswachsoxidat (RE) gemäß einem oder mehreren der vorhergehenden Ansprüche, **dadurch gekennzeichnet, dass** dieses eine lodfarbzahl (IFZ), gemessen nach DIN 6162 von kleiner als 10, bevorzugt kleiner als 8, besonders bevorzugt von kleiner als 6 aufweist.

4. Ethoxyliertes Reiswachsoxidat (RE) gemäß Anspruch 1 oder 2, **dadurch gekennzeichnet, dass** dieses eine Verseifungszahl, gemessen nach DIN ISO 3681 von kleiner als 50 mg KOH/g aufweist.

5. Verfahren zur Herstellung von ethoxyliertem Reiswachsoxidat (RE), gemäß einem oder mehrerer der vorhergehenden Ansprüche, umfassend die Schritte:
a) Bereitstellen eines Reiswachsoxidats (O)
b) Ethoxylierung des Reiswachsoxidats (O) unter basischen Bedingungen;
c) optionales Entfernen von Rückständen enthaltend Dioxan aus der organischen Phase, um das ethoxylierte Reiswachsoxidat (RE) in gereinigter Form zu erhalten.

6. Verfahren gemäß Anspruch 5, **dadurch gekennzeichnet, dass** das ethoxylierte Reiswachsoxidat (RE) eine Säurezahl größer gleich 45 mg KOH/g aufweist.

7. Verfahren gemäß Anspruch 5 oder 6, **dadurch gekennzeichnet, dass** die basischen Bedingungen der Ethoxylierung in Schritt b) des Verfahrens durch Zugabe einer 30 - 70 % -igen Lauge eines Alkalimetallhydroxids, bevorzugt einer Natrium- oder Kalilauge erzielt werden.

8. Verfahren gemäß einem oder mehreren der Ansprüche 5 bis 7, **dadurch gekennzeichnet, dass** die Ethoxylierung in Schritt b) des Verfahrens bei einer Temperatur zwischen 140°C und 200°C durchgeführt wird.

9. Verwendung des ethoxylierten Reiswachsoxidats (RE) gemäß mindestens einem der Ansprüche 1 bis 4 zu land- oder forstwirtschaftlichen Zwecken, in Beschichtungen, in Reinigungs- und/oder Pflegemitteln, in Schreibwarenartikeln, in Druckfarben und/oder in Lacken.

10. Emulsion mit einem polaren Lösemittel umfassend ein ethoxyliertes Reiswachsoxidat (RE) gemäß einem der Ansprüche 1 - 4.

11. Emulsion nach Anspruch 10, **dadurch gekennzeichnet, dass** es sich bei dem Lösemittel um Wasser handelt.

12. Beschichtungszusammensetzung umfassend ein ethoxyliertes Reiswachsoxidat (RE) gemäß einem der Ansprüche 1 - 4.

13. Farbstoffzusammensetzung umfassend ein ethoxyliertes Reiswachsoxidat (RE) gemäß einem der Ansprüche 1 - 4.

14. Pflege- und/oder Reinigungsmittel umfassend ein ethoxyliertes Reiswachsoxidat (RE) gemäß einem der Ansprüche 1 - 4.
